# EUROPEAN PATENT SPECIFICATION

(11) **EP 3 751 157 B1**
(45) Date of publication and mention of the grant of the patent: **05.04.2023**
(21) Application number: 20175908.1
(22) Date of filing: 21.05.2020
(51) Int. Cl.: F16B 19/02, F16B 5/02

(54) **ADJUSTABLE STOPPER WITH LOCKING RING**
VERSTELLBARER ANSCHLAG MIT VERRIEGELUNGSRING
BOUCHON RÉGLABLE COMPORTANT UN ANNEAU DE VERROUILLAGE

(30) Priority: 11.06.2019 GB 201908360
(43) Date of publication of application: 16.12.2020
(73) Proprietor: Illinois Tool Works Inc., Glenview, IL 60025 (US)
(72) Inventor: Ben, CROOKS, Illinois, 60025 (US)
(74) Representative: HGF

(56) References cited:
- EP-B1- 1 080 292
- EP-B1- 3 058 158
- EP-B1- 3 084 108
- DE-U1-202014 105 963
- US-A- 6 119 306
- US-A1- 2016 245 008
- US-A1- 2019 119 969
- US-B2- 10 150 355

## Description

This invention relates generally to spacer devices, and in particular to a self-adjusting spacer device for keeping two structural parts in a spaced relationship with each other and/or prevent damage.

### BACKGROUND

Spacer devices have common applications in the automobile sector. In particular, adjustable spacer devices are used to withstand and reduce the vibrations of parts which may be opened, such as the hood of the engine compartment or the trunk door.

Spacer devices have the function of supporting a movable structural part (for example the hood or trunk door of a vehicle) in a position flush with a stationary structural part (for example the body of a vehicle). The relative distance between the two structural parts may vary, for example, owing to the manufacturing and assembly tolerances. There is therefore a need to have adjustable spacer devices which allow compensation of the manufacturing and assembly tolerances between the two structural parts.

Various types of spacer devices are currently used in the automobile sector. Many such devices comprise a buffer head in the form of a shank and a socket into which the buffer head may be driven axially, commonly between discrete degrees of insertion. The device may further comprise mechanisms for locking the axial position of the buffer head in a desired position. In general, it is advantageous for the spacer device to be liquid-tight at all stages of operation, for example it is desirable to prevent ingress of fluids into the vehicle. In general, it is advantageous to impart pretension to the spacer device, for the purpose of further reducing vibrations when, for example, the trunk door of a vehicle is in a closed position, generally accomplished by a small axial displacement of the buffer head at the time of locking.

Various mechanisms are currently in use in the automobile sector to lock the axial position of the buffer head. Such mechanisms include the manual manipulation of the buffer head by an operator. When manipulating the buffer head in this manner, it is possible that an operator error may inadvertently alter the axial position of the buffer head, before it is locked in place, potentially rendering the device ineffective. In order to overcome this problem, it is known that the manual manipulation by an operator of an auxiliary component in place of the buffer head can reduce the likelihood of operator error in locking the position of the buffer head. For example, it is known that an auxiliary component that is coupled to the buffer head would reduce the likelihood of an operator error altering the axial position. However, currently available spacer devices are prone to operator error in the manipulation of the auxiliary component or are prone to lose liquid-tightness of the device. For example, if the auxiliary component is capable of moving axially then, by virtue of it being coupled with the buffer head, an operator error that inadvertently alters the axial position of the auxiliary component may also alter the axial position of the buffer head. In another example, the small axial displacement that introduces pretension of the buffer head involves the raising of the buffer head away from the socket, which may introduce a gap into which fluids may ingress. For example, US 20160245008 discusses a buffer device with a self-adjustable stop, the device comprising a buffer head in the form of a shank and a socket into which the buffer head in the form of a shank can be driven axially, the device further comprising an annular ring inserted axially in an axial bore of the socket and actuatable in turning to block the axial position of the buffer head in the socket, the ring comprising a bottom edge defining a thrust ramp designed, when the ring is caused to turn, for producing a cam effect with the axial bore in a counterbore in the end of the socket and enabling the buffer head to be raised.

### BRIEF SUMMARY OF THE DISCLOSURE

Certain examples of the present invention aim to address at least the above-mentioned problems and/or disadvantages and to provide at least the advantages described below. Accordingly, an aim of the present invention is to provide a self-adjusting spacer device capable of reducing (the risk of, or even avoiding) a potential operator error compared to the devices of the prior art.

Another aim of the present invention is to provide a self-adjusting spacer device which may ensure liquid-tightness (or minimises the risk of a fluid leak due to flawed installation).

In accordance with an aspect of the present invention, a self-adjusting spacer device is provided, comprising a bushing, a pin, and a locking member. The bushing forming a cavity having a first longitudinal axis between a proximal bushing end and a distal bushing end, and further comprising at least one opening, a flange member at the proximal bushing end and at least one internal first coupling member. The pin having a second longitudinal axis between a head portion and a shank portion, where said shank portion further comprises at least two external threaded portions, each partially circumferentially extending on a surface of said shank portion, and at least one second coupling member which is adapted to operably engage with said internal first coupling member of said bushing, so as to allow translational movement but prevent rotational movement of said pin relative to said bushing. The locking member having a bore along a third longitudinal axis between a proximal surface and a distal surface, and at least two internal threaded portions, each of which is partially circumferentially extending on a surface of said bore. Furthermore, when assembled, said locking member is coaxial with said bushing and said pin and operably coupled to said bushing via a coupling mechanism configured to allow rotational movement of said locking member relative to said bushing about said third longitudinal axis between an adjustment position, where said at least two internal threaded portions of said locking member do not engage with respective said at least two internal threaded portions of said shank portion, and a locking position, where said at least two internal threaded portions of said locking member operably engage with said at least external threaded portions of said shank portion, and wherein said coupling mechanism is further configured to prevent translational movement along said third longitudinal axis of said locking member relative to said bushing.

This provides the advantage of locking the pin axially with respect to the bushing without direct manipulation of the pin itself. In addition, as the locking member is incapable of axial movement relative to the bushing, there is a reduced risk of an operator inadvertently altering the axial position of the pin as the position is locked. Furthermore, the spacer device is adapted to allow an additional skirt feature to be provided on the bushing minimising the risk of water-ingress.

The coupling mechanism may comprise at least one arcuate guide slot, provided on said flange member and coaxial with said first longitudinal axis, and at least one locking pin, provided at said distal surface of said locking member and adapted to operably engage with said at least one arcuate guide slot.

The at least two internal threaded portions and respective at least two external threaded portions may be adapted to operably engage so as to provide axial movement of said pin relative to said locking member, when said locking member is rotated between said adjustment position and said locking position.

This provides the advantage of introducing pretension to the device in order to reduce vibrations. In addition, as the locking member is required to be incapable of axial movement, it is only the pin that moves axially when locked, which serves to minimise the risk of a fluid ingress as no gap is created between the elements of the device.

In certain embodiments the axial movement of the pin provided by the operable engagement of the at least two internal threaded portions and respective at least two external threaded portions is in the range of about 1 mm to about 1.5mm.

The at least one internal first coupling member may comprise an internal guide member of the bushing, projecting along said first longitudinal axis from said distal bushing end towards said proximal bushing end. The at least one second coupling member may comprise a guide recess protruding coaxial with said second longitudinal axis from a distal shank end of said pin towards said head portion of said pin.

The guide recess may have a predetermined first cross section and the guide member may have a predetermined second cross section. The predetermined first cross section of the guide recess may be complimentary to the predetermined second cross section of the guide member.

The at least one internal first coupling member may comprise at least one rib portion of the bushing, projecting inwardly from an inner wall of said cavity. The at least one second coupling member may comprise at least one rib portion of the shank portion of the pin, projecting outwardly from said shank portion.

The locking pin of the locking member may comprise a lug projecting along said third longitudinal axis.

The lug projecting along said third longitudinal axis may have a distal end portion which comprises a clamp mechanism adapted to couplingly engage with the at least one arcuate guide slot.

The clamp mechanism of the lug may be configured to project through the arcuate guide slot so as to prevent translational movement of said locking member relative to the bushing along the third longitudinal axis.

The at least one arcuate guide slot may be configured to limit rotational movement of the locking member, relative to the bushing, to a predetermined angular displacement.

The predetermined angular displacement of the locking member, relative to the bushing, may be no more than 90 degrees.

The head portion of the pin may be comprised of elastomeric material.

The bushing may further comprise at least one fastening member and the at least one fastening member may be adapted to mountingly engage with an external wall.

The at least two external threaded portions of the shank portion of the pin may be arranged mutually opposed to each other. The at least two internal threaded portions of the locking member may be arranged mutually opposed to each other.

### BRIEF DESCRIPTION OF THE DRAWINGS

Aspects of the invention are further described hereinafter with reference to the accompanying drawings, in which:
Figure 1 illustrates a self-adjusting spacer device according to the present invention.
Figure 2 illustrates the device according to Figure 1 in (a) a minimum insertion level, (b) a maximum insertion level, and (c) a bottom view;
Figure 3 illustrates the bushing of the device according to Figure 1 in (a) a front view, (b) a side view, (c) a cross-section view along the axis B of Figure 3(a), and (d) a top view;
Figure 4 illustrates the pin of the device according to Figure 1 in (a) a front view, (b) a side view, (c) a cross-section view along the axis C of Figure 4(a), and (d) a bottom view;
Figure 5 illustrates the locking member of the device according to Figure 1 in (a) a front view, (b) a cross-section view along the axis D of Figure 5(a), and (c) a top view;
Figure 6 illustrates a variant not covered by the present invention (a) a cross-section of a front view of the variant, (b) a top view cross-section along the axis E of Figure 6(a).

### DETAILED DESCRIPTION

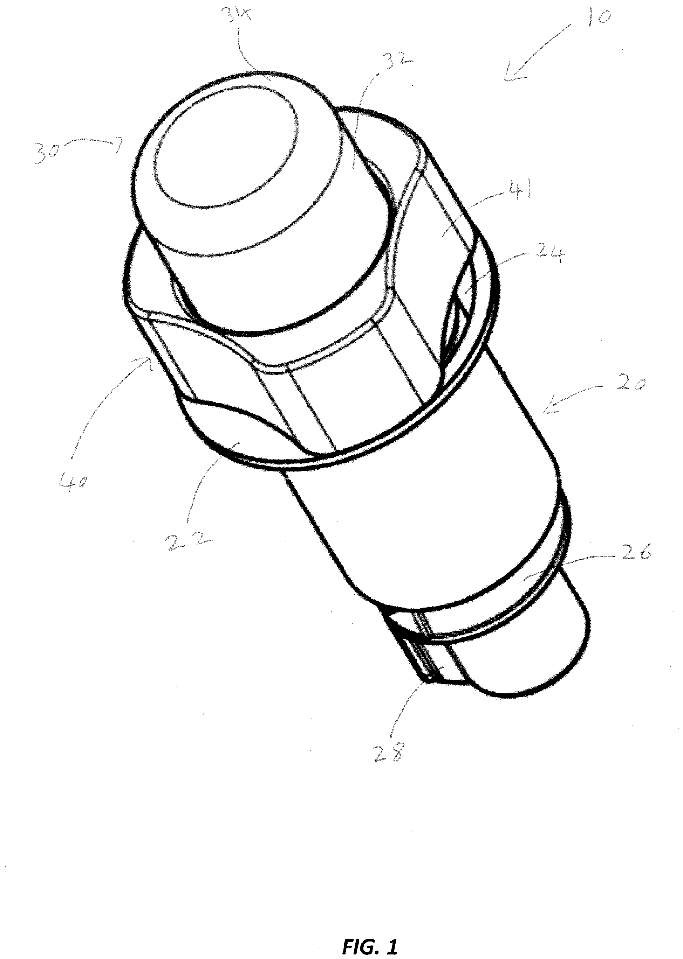

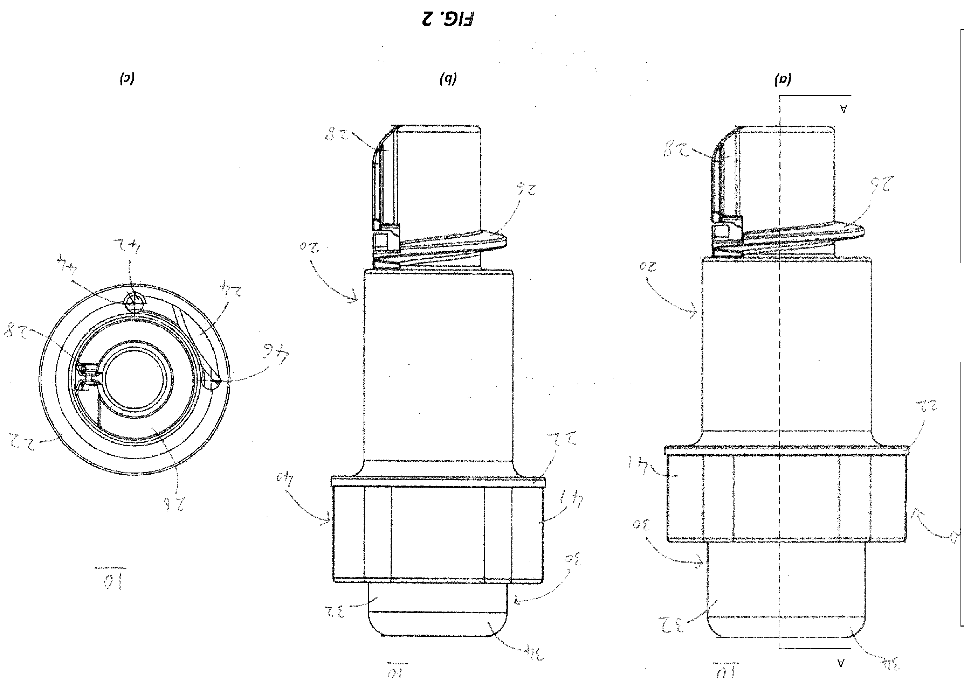

With reference to Figures 1 and 2, a self-adjusting spacer device **10** is illustrated according to an example of the present invention. The spacer device **10** has a longitudinal axis **A** and comprises a bushing **20,** a pin **30,** and a locking member **40.**

The bushing **20** comprises external fastening members **26** and **28** for engaging with an external wall (not shown) such as the body of an automobile when the bushing **20** is inserted into a suitable cavity. The external fastening members **26** and **28** are suitable for locking the bushing **20** in place during operation of the automobile or parts of the automobile such as a hood or trunk door. However, it is understood by the person skilled in the art that other types of fastening members may be used (e.g. anchor fix). The bushing **20** further comprises a flange **22.** In some examples, the flange **22** comprises an arcuate guide slot **24.** In some examples, the external fastening member **26** is a helical fixing, which locks the bushing **20** in place when rotated in a suitable cavity of an external wall.

The pin **30** is inserted axially into the bushing **20** and the locking member **40** and comprises a head **32** which projects outside of the bushing **20.** When inserted, the pin **30** is flush with the bushing **20** and locking member **40.** Optionally, a skirt member may be mounted with the bushing 20 such that the device is liquid-tight. In some examples, the head **32** of the pin **30** is provided with a cap **34** of elastomeric material, is applied onto the head **32** of the pin **30,** for example, by means of overmolding. However, it is understood by the person skilled in the art that the cap can be attached by any other suitable means.

The locking member **40** is inserted axially into the bushing **20** and comprises a gripping portion **41** which projects outside of the bushing **20** and is disposed upon the flange **22** and a locking pin **42** which projects along the axis A. The gripping portion **41** of the locking member **40** is disposed upon the flange **22.** In some examples, the gripping portion **41** of the locking member **40** is shaped to accommodate manual gripping and rotation of the locking member **40** by an operator. In some examples, the locking pin **42** comprises a lug having a clamping mechanism at its distal end. In some examples, the clamping mechanism of the lug of the locking pin **42** engages with the arcuate guide slot **24,** preventing axial movement of the locking member but allowing rotational movement. The rotational movement of the locking member may be limited by the extent of the movement of the locking pin **42** in the arcuate guide slot **24** and between an adjustment position **44** and a locking position **46.** The angular displacement separating the adjustment position **44** and locking position **46** is 90° in the example shown but may be less.

As illustrated in Figure 2, when the locking member **40** is in the adjustment position **44,** the pin **30** is capable of moving axially with respect to the bushing **20** and locking member **40.** In contrast, when the locking member **40** is in the locking position **46,** the pin **30** is incapable of moving axially with respect to the bushing **20** and locking member **40.**

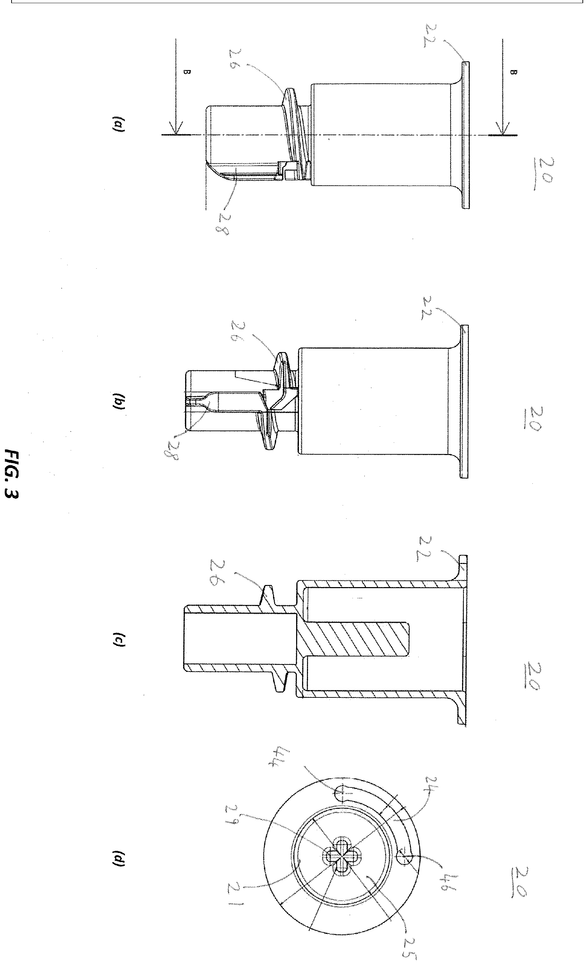

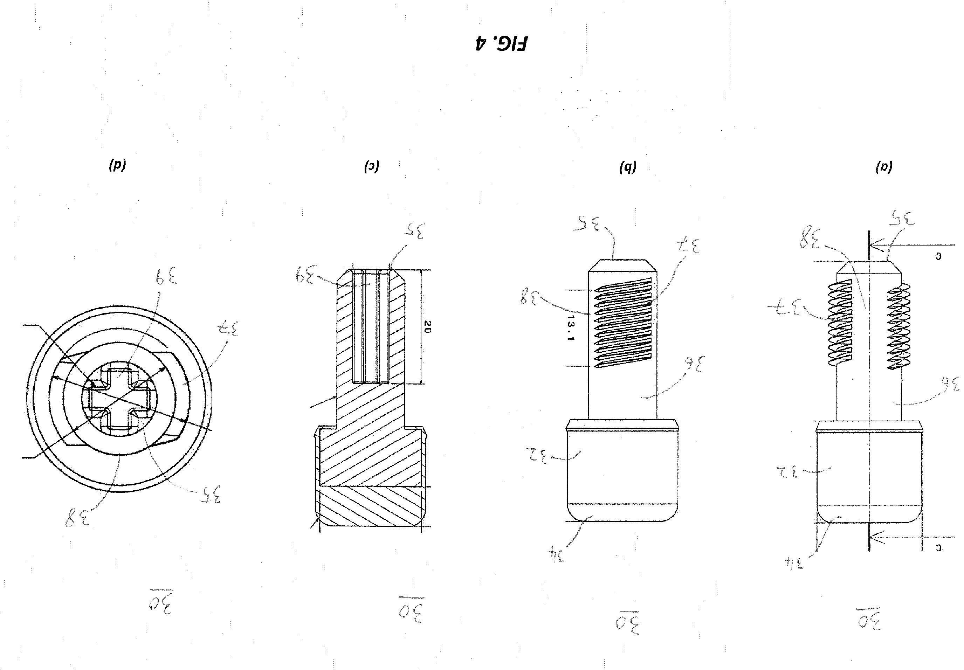

With reference to Figures 3 and 4, the bushing **20** and pin **30** further comprise coupling members **29** and **39** respectively. When the pin **30** is inserted into a cavity **21** of the bushing **20,** the coupling members **29** and **39** engage so as to prevent rotational movement of the pin **30** relative to the bushing **20.** In this particular example, the coupling member **29** takes the form of a cross-shaped protrusion extending from an internal wall **25** of the bushing **20** along the axis B and the coupling member **39** takes the form of a complimentarily cross-shaped recess extending inward along the axis C from an end portion **35** of the pin **30,** but the coupling members **29** and **39** are not limited to such. In an alternative example, one of the non-threaded engaging coupling members **29** and **39** may further comprise a serrated projection configured to engage with a threaded portion provided at the other one of the engaging coupling members 29 and 39 such that the pin **30** may be driven notch-by-notch into the bushing **20.**

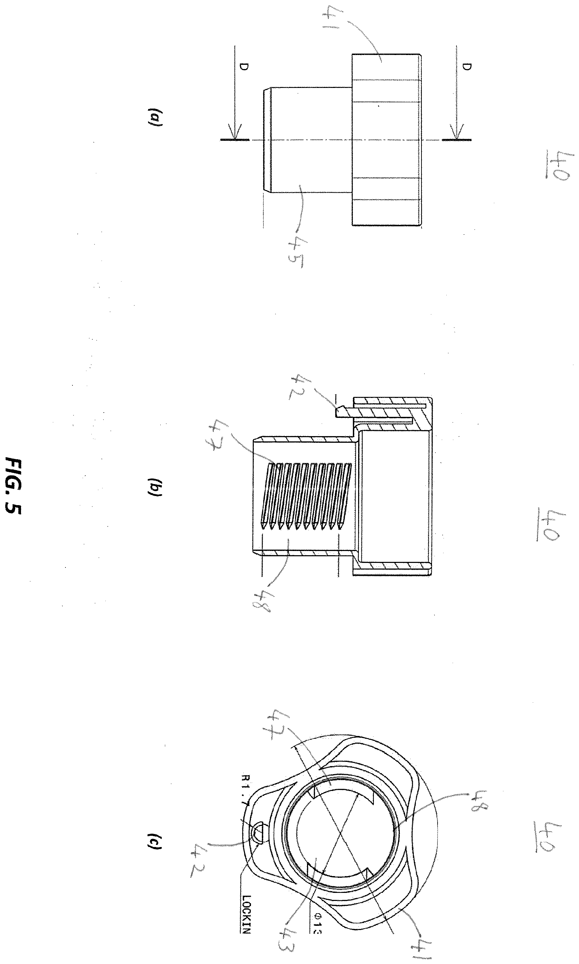

As illustrated in Figure 4 and with reference to Figure 5, the pin **30** further comprises a shank **36** which may be inserted into a bore **43** of the locking member **40** and the cavity **21** of the bushing **20** during assembly. The shank **36** comprises an external threaded portion **37** which does not extend along the entire circumference of the shank **36** and external non-threaded portions **38** which interrupt the threaded portion **37.** In this particular example, the non-threaded portions **38** are arranged mutually opposed to one another such that the external threaded portion **37** comprises two distinct portions, each extending along a part of the circumference of the shank **36,** but they are not limited to such.

The locking member **40** further comprises a coupling portion **45** through which the bore **43** extends, and which may be inserted into the cavity **21** of the bushing **20** during assembly. The coupling portion **45** comprises an internal threaded portion **47** which projects radially inward and does not extend along the entire circumference of the cavity **43,** and internal non-threaded portions **48** which interrupt the threaded portion **47.** In this particular example, the non-threaded portions **48** are arranged mutually opposed to one another such that the internal threaded portion **47** comprises two distinct portions, each extending along a part of the circumference of the cavity **43,** but they are not limited to such.

As illustrated in Figure 1 through 5, when the self-adjusting spacer device **10** is in the adjustment position **44,** the pin **30** is unable to rotate due to the coupling members **29** and **39,** and the threaded portion **37** of the pin **30** is angularly offset and disengaged from the threaded portion **47** of the locking member **40.** In this position, the non-threaded portions **38** of the pin **16** are facing the non-threaded portions **48** of the locking member **40.** In this position, the pin **30** may move axially with respect to the bushing **20.** The axial movement of the pin **30** in the adjustment position **44** is restricted such that it may maintain its axial position with respect to the bushing **20** unless adequate force is applied to change its position. For example, the head **32** or shank **36** and the locking member **40** or bushing **20** may be provided with portions (which may be elastomeric) that generate a frictional force when the pin **30** is inserted into either or both of the locking member **40** and bushing **20.** In another example, the non-threaded portion **38** of the pin **30** may further comprise a serrated projection configured to engage with the threaded portion **47** of the locking member **40** such that the pin **30** may be driven notch-by-notch into the locking member **40** and bushing **20.** In another example, the non-threaded portion **48** of the locking member may further comprise a serrated projection configured to engage with the threaded portion **38** of the pin **30** such that the pin **30** may be driven notch-by-notch into the locking member **40** and bushing **20.**

The self-adjusting spacer device **10** is supplied with the locking member **40** arranged in the adjustment position **44** and with the pin **30** at minimal insertion into the cavity **21** of the bushing **20,** as in Figure 2(a). The bushing **20** is fixed to a wall (not shown), inside a circular cavity provided with coupling members which may engage the external fastening members **26** and **28.** The flange **22** is pressed against the top surface of the wall and the bushing **20,** pin **30** and locking member **40** close the cavity inside which the bushing **20** is fixed.

With the locking member **40** in the adjustment position **44** and the bushing **20** fixed inside a cavity in the vehicle body, the hood or trunk door of the vehicle is brought into the closed position. The hood or trunk door of the vehicle rests on the head **32** of the pin **30** and pushes the pin **30** towards the inside of the cavity **21** of the bushing **20** and the bore **41** of the locking member **40.** The pin **20** automatically assumes the correct adjustment position. In the example shown in Figure 2(b), the pin **30** is fully inserted into the cavity **21** of the bushing **20** and the bore **41** of the locking member **40.** Then, the hood or trunk door is raised. The pin **30** remains in the set adjustment position owing to the aforementioned restriction on its axial movement. Then, the locking member **40** is rotated into the locking position **46.** During rotation of the locking member **40** between the adjustment position **44** and the locking position **46,** the threaded portion **47** of the locking member **40** engages with the threaded portion **37** of the pin **30.** The rotation of the locking member **40** from the adjustment position **44** into the locking position **46,** following engagement between the threads **47** and **37,** produces an axial travel of the pin **30** which is dependent upon the pitch of the threads and the angular displacement separating the adjustment position **44** and locking position **46.** This dependency allows for the spacer device to be easily adjusted for different manufacturer specifications. In this way, when the hood or trunk door of the vehicle is closed it must compress slightly the elastomeric portion **34** of the head **32** of the pin **30,** and this produces a slight pretension effect which prevents vibrations of the hood or trunk door in the closed position. In the locking position **46** the pin **30** is locked axially owing to the engagement between the threaded portion **37** of the pin **30** and the threaded portion **47** of the locking member **40.** Furthermore, the pin **30** in the locking position **46** is also locked angularly owing to the engagement between the coupling members **29** and **39.** Alternatively, the spacer device **10** may be adjusted to provide over-slam protection so as to prevent damage to the paint. In this instance, the pin **30** is moved to a position so as to provide a "gap" condition.

The self-adjusting spacer device **10** ensures the liquid-tightness owing to the fact that the locking member **40** makes liquid-tight contact with the bushing **20** and that the pin **30** is a solid one-piece element which makes liquid-tight contact with the locking member **40** and bushing **20.** Moreover, the bushing **20** is connected to the vehicle body in a liquid-tight manner owing to an optional skirt feature **57** and the flange **22.**

The self-adjusting spacer device **10** ensures reduced risk of operator error in the axial positioning of the pin **30** owing to the fact that the pin **30** is incapable of rotating relative to the bushing **20** and that the locking member **40,** which is incapable of moving axially relative to the bushing **20,** is rotated to lock the pin **30** axially relative to the bushing **20.**

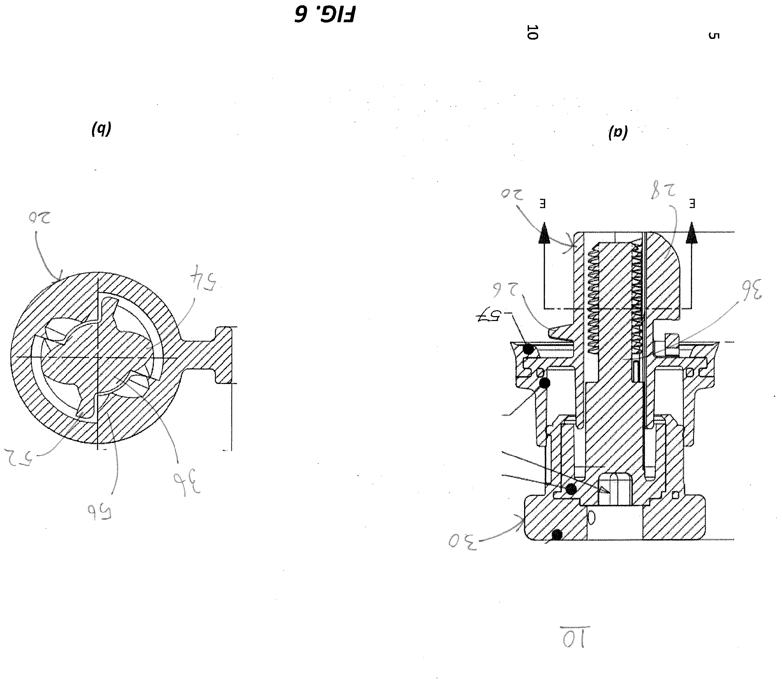

The self-adjusting spacer device according to the present invention may be subject to numerous constructional variants. Figure 6 represents an embodiment not covered by the invention. Any parts corresponding to those described above are indicated by the same reference numbers. In this example, the pin **30** may comprise a coupling members **54** and **56** adapted to threadingly engage with each other. A coupling member **52** is provided as a locking element. When the pin **30** is inserted into the cavity **21** of the bushing **20,** the coupling members **52, 54,** and **56** engage so as to prevent rotational movement of the pin **30** relative to the bushing **20.** In the example shown, coupling members **52** and **54** take the form of rib protrusions extending outward from the shank **36** of the pin **30** and coupling member **56** takes the form of rib protrusions extending inwardly from the inner wall of the cavity **21** of the bushing **20.**

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

The reader's attention is directed to all papers and documents which are filed concurrently with or previous to this specification in connection with this application and which are open to public inspection with this specification.

## Claims

1. A self-adjusting spacer device (10), comprising:
a bushing (20), forming a cavity having a first longitudinal axis (B) between a proximal bushing end and a distal bushing end, further comprising at least one opening, a flange member (22) at said proximal bushing end and at least one internal first coupling member (29);
a pin (30), having a second longitudinal axis (C) between a head portion (32) and a shank portion (36), said shank portion (36) further comprising at least two external threaded portions (37), each partially circumferentially extending on a surface (38) of said shank (36), and at least one second coupling member (39) which is adapted to operably engage with said internal first coupling member (29) of said bushing (20) so as to allow translational but prevent rotational movement of said pin (30) relative to said bushing (20);
a locking member (40), having a bore (43) along a third longitudinal axis (D) between a proximal surface and a distal surface, and at least two internal threaded portions (47), each partially circumferentially extending on a surface of said bore (43); wherein, when assembled, said locking member (40) is coaxial with said bushing (20) and said pin (30) and operably coupled to said bushing (20) via a coupling mechanism (24, 42) configured to allow rotational movement of said locking member (40) relative to said bushing (20) about said third longitudinal axis (D) between an adjustment position (44), where said at least two internal threaded portions (47) of said locking member (40) do not engage with respective said at least two external threaded portions (37) of said shank portion (36), and a locking position (46), where said at least two internal threaded portions (47) of said locking member (40) operably engage with said at least two external threaded portions (37) of said shank portion (36), **characterized in that** said coupling mechanism (24, 42) is further configured to prevent translational movement along said third longitudinal axis (D) of said locking member (40) relative to said bushing (20).

2. A self-adjusting spacer device according to claim 1, said coupling mechanism comprising at least one arcuate guide slot (24), provided on said flange member (22) coaxial with said first longitudinal axis (B), and at least one locking pin (42), provided at said distal surface of said locking member (40) and adapted to operably engage with said at least one arcuate guide slot (24).

3. A self-adjusting spacer device in accordance with any preceding claim, wherein said at least two internal threaded portions (47) and respective said at least two external threaded portions (37) are adapted to operably engage so as to provide axial movement of said pin (30) relative to said locking member (40), when said locking member (40) is rotated between said adjustment position (44) and said locking position (46).

4. A self-adjusting spacer device in accordance with any preceding claim, wherein said at least one internal first coupling member (29) comprises an internal guide member of said bushing (20) projecting along said first longitudinal axis (B) from said distal bushing end towards said proximal bushing end and said at least one second coupling member (39) comprises a guide recess protruding coaxial with said second longitudinal axis (C) from a distal shank end of said pin (30) towards said head portion (32) of said pin (30).

5. A self-adjusting spacer device in accordance with claim 4, wherein said guide recess has a predetermined first cross section that is complementary to a second cross section of said guide member.

6. A self-adjusting spacer device in accordance with any preceding claim, wherein said at least one internal first coupling member (29) comprises at least one rib portion projecting inwardly from an inner wall of said cavity and said at least one second coupling member (39) comprises at least one rib portion projecting outwardly from said shank portion (36) of said pin (30).

7. A self-adjusting spacer device in accordance with any one of claims 2 to 6, wherein said at least one locking pin (42) of said locking member (40) comprises a lug projecting along said third longitudinal axis (D).

8. A self-adjusting spacer device according to claim 7, wherein a distal end portion of said lug comprises a clamp mechanism adapted to couplingly engage with said at least one arcuate guide slot (24).

9. A self-adjusting spacer device in accordance with claim 8, wherein said clamp mechanism is configured to project through said arcuate guide slot (24) so as to prevent translational movement of said locking member (40) relative to said bushing (20) along said third longitudinal axis (D).

10. A self-adjusting spacer device in accordance with any one of claims 2 to 9, wherein said at least one arcuate guide slot (24) is configured to limit rotational movement of said locking member (40) relative to said bushing (20) to a predetermined angular displacement.

11. A self-adjusting spacer device in accordance with claim 10, wherein said predetermined angular displacement is no more than 90 degrees.

12. A self-adjusting spacer device in accordance with any preceding claim, wherein said head portion (32) of said pin (30) comprises elastomeric material.

13. A self-adjusting spacer device in accordance with any preceding claim, wherein said bushing (20) further comprises at least one fastening member (26, 28) adapted to mountingly engage with an external wall.

14. A self-adjusting spacer device in accordance with any preceding claim, wherein said at least two external threaded portions (37) are arranged mutually opposing to each other and respective said at least two internal threaded portions (47) are arranged mutually opposing to each other.

## Patentansprüche

1. Selbsteinstellende Abstandsvorrichtung (10), aufweisend:
eine Buchse (20), die einen Hohlraum bildet, der eine erste Längsachse (B) zwischen einem proximalen Buchsenende und einem distalen Buchsenende aufweist, ferner aufweisend zumindest eine Öffnung, ein Flanschelement (22) an dem proximalen Buchsenende und zumindest ein inneres erstes Kupplungselement (29);
einen Stift (30), der eine zweite Längsachse (C) zwischen einem Kopfabschnitt (32) und einem Schaftabschnitt (36) aufweist, wobei der Schaftabschnitt (36) ferner zumindest zwei äußere Gewindeabschnitte (37), von denen sich jeder teilweise in Umfangsrichtung auf einer Oberfläche (38) des Schafts (36) erstreckt, und zumindest ein zweites Kupplungselement (39), das ausgelegt ist, mit dem inneren ersten Kupplungselement (29) der Buchse (20) betriebsfähig in Eingriff zu kommen, um eine Translationsbewegung des Stifts (30) relativ zu der Buchse (20) zu ermöglichen, eine Drehbewegung aber zu verhindern, aufweist;
ein Verriegelungselement (40), das eine Bohrung (43) entlang einer dritten Längsachse (D) zwischen einer proximalen Fläche und einer distalen Fläche und zumindest zwei innere Gewindeabschnitte (47), von denen sich jeder teilweise in Umfangsrichtung auf einer Oberfläche der Bohrung (43) erstreckt, aufweist; wobei, wenn zusammengebaut, das Verriegelungselement (40) koaxial mit der Buchse (20) und dem Stift (30) ist und mit der Buchse (20) über einen Kopplungsmechanismus (24, 42) betriebsfähig gekoppelt ist, der so konfiguriert ist, dass er eine Drehbewegung des Verriegelungselements (40) relativ zu der Buchse (20) um die dritte Längsachse (D) zwischen einer Einstellposition (44), in der die zumindest zwei inneren Gewindeabschnitte (47) des Verriegelungselements (40) nicht mit den jeweiligen zumindest zwei äußeren Gewindeabschnitten (37) des Schaftabschnitts (36) in Eingriff stehen, und einer Verriegelungsposition (46), in der die zumindest zwei inneren Gewindeabschnitte (47) des Verriegelungselements (40) mit den zumindest zwei äußeren Gewindeabschnitten (37) des Schaftabschnitts (36) betriebsfähig in Eingriff kommen, ermöglicht, **dadurch gekennzeichnet, dass** der Kopplungsmechanismus (24, 42) ferner konfiguriert ist, eine Translationsbewegung entlang der dritten Längsachse (D) des Verriegelungselements (40) relativ zu der Buchse (20) zu verhindern.

2. Selbsteinstellende Abstandsvorrichtung nach Anspruch 1, wobei der Kopplungsmechanismus zumindest einen bogenförmigen Führungsschlitz (24), der an dem Flanschelement (22) koaxial zu der ersten Längsachse (B) vorgesehen ist, und zumindest einen Verriegelungsstift (42), der an der distalen Fläche des Verriegelungselements (40) vorgesehen ist und ausgelegt ist, mit dem zumindest einen bogenförmigen Führungsschlitz (24) betriebsfähig in Eingriff zu kommen, aufweist.

3. Selbsteinstellende Abstandsvorrichtung nach einem der vorhergehenden Ansprüche, wobei die zumindest zwei inneren Gewindeabschnitte (47) und die jeweiligen zumindest zwei äußeren Gewindeabschnitte (37) so ausgelegt sind, dass sie betriebsfähig in Eingriff kommen, um eine axiale Bewegung des Stifts (30) relativ zu dem Verriegelungselement (40) vorzusehen, wenn das Verriegelungselement (40) zwischen der Einstellposition (44) und der Verriegelungsposition (46) gedreht wird.

4. Selbsteinstellende Abstandsvorrichtung nach einem der vorhergehenden Ansprüche, wobei das zumindest eine innere erste Kupplungselement (29) ein inneres Führungselement der Buchse (20) aufweist, das entlang der ersten Längsachse (B) von dem distalen Buchsenende zu dem proximalen Buchsenende hervorragt, und das zumindest eine zweite Kupplungselement (39) eine Führungsausnehmung aufweist, die koaxial zu der zweiten Längsachse (C) von einem distalen Schaftende des Stifts (30) zu dem Kopfabschnitt (32) des Stifts (30) vorsteht.

5. Selbsteinstellende Abstandsvorrichtung nach Anspruch 4, wobei die Führungsausnehmung einen vorbestimmten ersten Querschnitt aufweist, der komplementär zu einem zweiten Querschnitt des Führungselements ist.

6. Selbsteinstellende Abstandsvorrichtung nach einem der vorhergehenden Ansprüche, wobei das zumindest eine innere erste Kupplungselement (29) zumindest einen Rippenabschnitt aufweist, der von einer Innenwand des Hohlraums nach innen hervorragt, und das zumindest eine zweite Kupplungselement (39) zumindest einen Rippenabschnitt aufweist, der von dem Schaftabschnitt (36) des Stifts (30) nach außen hervorragt.

7. Selbsteinstellende Abstandsvorrichtung nach einem der Ansprüche 2 bis 6, wobei der zumindest eine Verriegelungsstift (42) des Verriegelungselements (40) einen Ansatz aufweist, die entlang der dritten Längsachse (D) hervorragt.

8. Selbsteinstellende Abstandsvorrichtung nach Anspruch 7, wobei ein distaler Endabschnitt des Ansatzes einen Klemmmechanismus aufweist, der so ausgelegt ist, dass er mit dem zumindest einen bogenförmigen Führungsschlitz (24) in Kopplungseingriff kommt.

9. Selbsteinstellende Abstandsvorrichtung nach Anspruch 8, wobei der Klemmmechanismus so konfiguriert ist, dass er durch den bogenförmigen Führungsschlitz (24) hindurchragt, um eine Translationsbewegung des Verriegelungselements (40) relativ zu der Buchse (20) entlang der dritten Längsachse (D) zu verhindern.

10. Selbsteinstellende Abstandsvorrichtung nach einem der Ansprüche 2 bis 9, wobei der zumindest eine bogenförmige Führungsschlitz (24) so konfiguriert ist, dass er eine Drehbewegung des Verriegelungselements (40) relativ zu der Buchse (20) auf eine vorbestimmte Winkelverschiebung begrenzt.

11. Selbsteinstellende Abstandsvorrichtung nach Anspruch 10, wobei die vorbestimmte Winkelverschiebung nicht mehr als 90 Grad beträgt.

12. Selbsteinstellende Abstandsvorrichtung nach einem der vorhergehenden Ansprüche, wobei der Kopfabschnitt (32) des Stifts (30) elastomeres Material aufweist.

13. Selbsteinstellende Abstandsvorrichtung nach einem der vorhergehenden Ansprüche, wobei die Buchse (20) ferner zumindest ein Befestigungselement (26, 28) aufweist, das so ausgelegt ist, dass es mit einer Außenwand in Montageeingriff kommt.

14. Selbsteinstellende Abstandsvorrichtung nach einem der vorhergehenden Ansprüche, wobei die zumindest zwei äußeren Gewindeabschnitte (37) einander gegenüberliegend angeordnet sind und die jeweiligen zumindest zwei inneren Gewindeabschnitte (47) entsprechend einander gegenüberliegend angeordnet sind.

## Revendications

1. Dispositif d'espacement auto-ajustable (10), comprenant :
une douille (20), formant une cavité ayant un premier axe longitudinal (B) entre une extrémité proximale de douille et une extrémité distale de douille, comprenant en outre au moins une ouverture, un élément de bride (22) sur ladite extrémité proximale de douille et au moins un premier élément de couplage interne (29) ;
une broche (30), ayant un deuxième axe longitudinal (C) entre une partie de tête (32) et une partie de tige (36), ladite partie de tige (36) comprenant en outre au moins deux parties filetées externes (37), chacune s'étendant partiellement circonférentiellement sur une surface (38) de ladite tige (36), et au moins un deuxième élément de couplage (39) qui est adapté pour s'engager de manière opérationnelle avec ledit premier élément de couplage interne (29) de ladite douille (20) de sorte à permettre la translation mais empêcher le mouvement de rotation de ladite broche (30) par rapport à ladite douille (20) ;
un élément de verrouillage (40), ayant un alésage (43) le long d'un troisième axe longitudinal (D) entre une surface proximale et une surface distale, et au moins deux parties filetées internes (47), chacune s'étendant partiellement circonférentiellement sur une surface dudit alésage (43) ; dans lequel, une fois assemblé, ledit élément de verrouillage (40) est coaxial avec ladite douille (20) et ladite broche (30) et est couplé de manière opérationnelle à ladite douille (20) via un mécanisme de couplage (24, 42) configuré pour permettre un mouvement de rotation dudit élément de verrouillage (40) par rapport à ladite douille (20) autour dudit troisième axe longitudinal (D) entre une position de réglage (44), où lesdites au moins deux parties filetées internes (47) dudit élément de verrouillage (40) ne s'engagent pas avec lesdites au moins deux parties filetées externes respectives (37) de ladite partie de tige (36), et une position de verrouillage (46), où lesdites au moins deux parties filetées internes (47) dudit élément de verrouillage (40) s'engagent de manière opérationnelle avec lesdites au moins deux parties filetées externes (37) de ladite partie de tige (36), **caractérisé en ce que** ledit mécanisme de couplage (24, 42) est en outre configuré pour empêcher un mouvement de translation le long dudit troisième axe longitudinal (D) dudit élément de verrouillage (40) par rapport à ladite douille (20).

2. Dispositif d'espacement auto-ajustable selon la revendication 1, ledit mécanisme de couplage comprenant au moins une fente de guidage arquée (24), fournie sur ledit élément de bride (22) coaxiale avec ledit premier axe longitudinal (B), et au moins une broche de verrouillage (42), à condition que ladite surface distale dudit élément de verrouillage (40) soit adaptée pour s'engager de manière opérationnelle avec ladite au moins une fente de guidage arquée (24).

3. Dispositif d'espacement auto-ajustable selon l'une quelconque des revendications précédentes, dans lequel lesdites au moins deux parties filetées internes (47) et lesdites au moins deux parties filetées externes respectives (37) sont adaptées pour s'engager de manière opérationnelle de sorte à fournir un mouvement axial de ladite broche (30) par rapport audit élément de verrouillage (40), lorsque ledit élément de verrouillage (40) est tourné entre ladite position d'ajustage (44) et ladite position de verrouillage (46).

4. Dispositif d'espacement auto-ajustable selon l'une quelconque des revendications précédentes, dans lequel ledit au moins un premier élément de couplage interne (29) comprend un élément de guidage interne de ladite douille (20) faisant saillie le long dudit premier axe longitudinal (B) à partir de ladite extrémité de douille distale vers ladite extrémité de douille proximale et ledit au moins un deuxième élément de couplage (39) comprend un évidement de guidage faisant saillie coaxialement avec ledit deuxième axe longitudinal (C) à partir d'une extrémité de tige distale de ladite broche (30) vers ladite partie de tête (32) de ladite broche (30).

5. Dispositif d'espacement auto-ajustable selon la revendication 4, dans lequel ledit évidement de guidage a une première section transversale prédéterminée qui est complémentaire d'une deuxième section transversale dudit élément de guidage.

6. Dispositif d'espacement auto-ajustable selon l'une quelconque des revendications précédentes, dans lequel ledit au moins un premier élément de couplage interne (29) comprend au moins une partie de nervure faisant saillie vers l'intérieur à partir d'une paroi interne de ladite cavité et ledit au moins un deuxième élément de couplage (39) comprend au moins une partie de nervure faisant saillie vers l'extérieur à partir de ladite partie de tige (36) de ladite broche (30).

7. Dispositif d'espacement auto-ajustable selon l'une quelconque des revendications 2 à 6, dans lequel ladite au moins une broche de verrouillage (42) dudit élément de verrouillage (40) comprend une patte faisant saillie le long dudit troisième axe longitudinal (D) .

8. Dispositif d'espacement auto-ajustable selon la revendication 7, dans lequel une partie d'extrémité distale de ladite patte comprend un mécanisme de serrage adapté pour s'engager de manière couplée avec ladite au moins une fente de guidage arquée (24).

9. Dispositif d'espacement auto-ajustable selon la revendication 8, dans lequel ledit mécanisme de serrage est configuré pour faire saillie à travers ladite fente de guidage arquée (24) de manière à empêcher un mouvement de translation dudit élément de verrouillage (40) par rapport à ladite douille (20) le long dudit troisième axe longitudinal (D).

10. Dispositif d'espacement auto-ajustable selon l'une quelconque des revendications 2 à 9, dans lequel ladite au moins une fente de guidage arquée (24) est configurée pour limiter le mouvement de rotation dudit élément de verrouillage (40) par rapport à ladite douille (20) à un déplacement angulaire prédéterminé.

11. Dispositif d'espacement auto-ajustable selon la revendication 10, dans lequel ledit déplacement angulaire prédéterminé n'est pas supérieur à 90 degrés.

12. Dispositif d'espacement auto-ajustable selon l'une quelconque des revendications précédentes, dans lequel ladite partie de tête (32) de ladite broche (30) comprend un matériau élastomère.

13. Dispositif d'espacement auto-ajustable selon l'une quelconque des revendications précédentes, dans lequel ladite douille (20) comprend en outre au moins un élément de fixation (26, 28) adapté pour s'engager par montage avec une paroi externe.

14. Dispositif d'espacement auto-ajustable selon l'une quelconque des revendications précédentes, dans lequel lesdites au moins deux parties filetées externes (37) sont agencées de manière mutuellement opposée l'une à l'autre et lesdites au moins deux parties filetées internes respectives (47) sont agencées de manière mutuellement opposée l'une à l'autre.
